**Europäisches Patentamt**

**European Patent Office**

**Office européen des brevets**

(19)

(11) Numéro de publication: **0 060 956**
**B1**

(12) **FASCICULE DE BREVET EUROPEEN**

(45) Date de publication du fascicule du brevet: **03.10.84**

(21) Numéro de dépôt: **81400477.6**

(22) Date de dépôt: **25.03.81**

(51) Int. Cl.³: **A 01 B 59/00,** A 01 D 85/00, A 01 F 15/00

(54) **Presse à balles.**

(43) Date de publication de la demande:
**29.09.82 Bulletin 82/39**

(45) Mention de la délivrance du brevet:
**03.10.84 Bulletin 84/40**

(84) Etats contractants désignés:
**DE FR GB IT NL**

(56) Documents cités:
**DE-A-2 926 727**
**DE-U-1 933 963**
**US-A-4 065 914**
**US-A-4 123 081**

(73) Titulaire: **JOHN DEERE (Société Anonyme)**
**8, Quai de la Madeleine**
**F-45000 Orléans (FR)**

(72) Inventeur: **Giani, Angel**
**Avenue Jean Dominique**
**F-70100 Gray-la-Ville (FR)**

(74) Mandataire: **Pruvost, Marc Henri et al**
**Cabinet ORES 6, Avenue de Messine**
**F-75008 Paris (FR)**

EP 0 060 956 B1

Courier Press, Leamington Spa, England.

## Description

La présente invention se rapporte aux presses à balles, du type destiné à former des balles cylindriques ou rondes à partir de produits de récolte ramassés sur le sol.

Il existe déjà des presses à balles attelées à un tracteur, formant des balles cylindriques ou rondes de grand diamètre, qui lors de leur progression ramassent les produits de récolte à partir d'un andain au moins d'un mécanisme ramasseur, pour les transférer vers l'arrière à un orifice d'entrée débouchant dans une chambre dans laquelle ces produits sont roulés en une balle entre un transporteur supérieur et un transporteur inférieur formés de bandes ou courroies parallèles, la balle tournant, au cours de sa formation, autour d'un axe horizontal.

Il arrive fréquemment que l'andain soit plus étroit que le mécanisme ramasseur et que l'orifice d'entrée dans la chambre de formation de la balle, qui s'étend transversalement à l'andain. En conséquence, les produits de récolte ne sont amenés qu'à une partie seulement de la largeur de cet orifice d'entrée, ce qui à son tour donne une balle dont la section droite n'est pas uniforme sur toute sa longueur. Par exemple, si les produits de récolte sont plus denses dans la partie médiane de l'orifice d'entrée, la balle résultante va avoir une forme en tonneau.

Afin de remédier à cet inconvénient, le conducteur du tracteur auquel la presse est attelée dirige habituellement son véhicule de façon telle que la presse suive un trajet sinueux, avec un balayage latéral par rapport à l'andain, et l'andain se présente ainsi au ramasseur dans une zone se déplaçant progressivement sur sa largeur et fournissant une balle ayant un diamètre en section droite uniforme. Parmi d'autres inconvénients résultant d'une conduite sinueuse du tracteur, il faut mentionner le faut que le conducteur ne dispose plus alors que de peu de temps pour des tâches autres que la surveillance de ce serpentement.

Afin d'éviter la nécessité d'un tel serpentement, il a été proposé, dans le brevet U.S. 4 065 914, de monter un système hydraulique à piston et cylindre ou vérin entre le châssis de la presse et une barre d'attelage raccordée au tracteur, ce vérin étant relié à pivotement à un côté du châssis de la presse. Le conducteur peut alors diriger la presse à balles en actionnant le système formant vérin pour faire pivoter la presse autour de sa liaison pivotante, de sorte que la presse subit un mouvement de serpentement tandis que le tracteur progresse selon sa route normale. Toutefois, avec un tel agencement, le conducteur doit diriger à la fois la presse à balles et le tracteur.

Le but de l'invention est de remédier à ces inconvénients des presses à balles connues.

L'invention concerne en conséquence une presse à balles destinée à être attelée à un tracteur devant progresser parallèlement à un andain, comprenant une chambre s'étendant transversalement à la direction de progression de la presse pour la formation d'une balle cylindrique à partir de produits de récolte, et un orifice d'entrée s'étendant transversalement à l'avant de cette chambre et débouchant dans celle-ci, ainsi que des moyens pour amener ces produits de récolte à cet orifice d'entrée à partir d'un andain de largeur inférieure à celle dudit orifice d'entrée et des moyens de direction ou de guidage capables de déplacer latéralement la presse par rapport au tracteur et ainsi à l'andain, afin de rétablir l'uniformité de diamètre de la balle lors de sa formation caractérisée en ce qu'elle comprend des moyens détecteurs, tels que des moyens palpeurs, pour détecter les variations de diamètre de la balle entre ses différents sections droites au cours de sa formation, et en ce que ces moyens détecteurs sont reliés à ces moyens de direction et de guidage pour commander automatiquement les déplacements latéraux de la presse par rapport à l'andain en fonction de la détection assurée par lesdits moyens détecteurs.

Ainsi, la presse à balles est dirigée automatiquement, et il suffit au conducteur du tracteur de diriger son véhicule pour suivre une route normale.

Suivant une réalisation possible, les moyens de direction ou de guidage comprennent deux organes disposés transversalement à la direction de déplacement de la presse, ces organes étant reliés ou pouvant être reliés au tracteur et à la presse respectivement et étant déplaçables l'un par rapport à l'autre dans la direction transversale, de sorte que la presse se déplace transversalement à l'andain, un dispositif d'actionnement étant prévu pour assurer ce déplacement relatif.

Le déplacement relatif concerné peut être provoqué par un système à piston et cylindre ou vérin relié aux organes.

Suivant une autre particularité, les moyens détecteurs comprennent un premier et un second bras montés de façon pivotante, pouvant se déplacer chacun en fonction de l'augmentation de section droite de la balle en cours de formation et écartés l'un de l'autre sur la longueur de cette balle, et un circuit électrique agencé de façon à détecter les positions des bras et à fournir une sortie commandant les moyens de direction en fonction de cette position.

La description qui va suivre, faite en regard des dessins annexés, donnés à titre non limitatif, permettra de mieux comprendre l'invention.

La Fig. 1 est une vue en perspective depuis l'avant et depuis la gauche d'une presse pour la formation de balles cylindriques ou rondes de grand diamètre, correspondant à un mode de réalisation de l'invention.

La Fig. 2 est une vue de profil depuis la gauche de la presse à balles suivant la Fig. 1, une partie de la paroi latérale étant arrachée pour montrer une balle en cours de formation.

La Fig. 3 est une vue en plan de la presse à balles reliée à un tracteur par lequel elle est remorquée, mais comportant un organe d'attelage ou timon différent, correspondant à un autre mode de réalisation de l'invention.

La Fig. 4 est une représentation schématique montrant en particulier un système hydro-électrique comprenant un mécanisme de guidage et un dispositif de détection pour guider la presse représentée sur les Fig. 1 et 2 ou sur la 3, mais qui est montrée par rapport au mode de réalisation formant la Fig. 4.

La Fig. 5 est un diagramme de détail d'un circuit comparateur prévu dans le dispositif détecteur visible sur la Fig. 4.

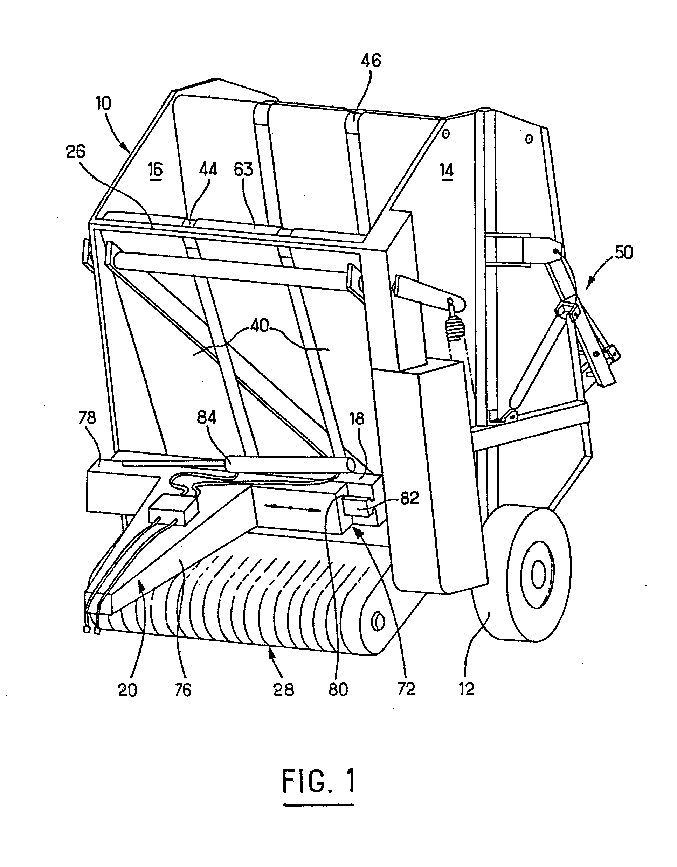

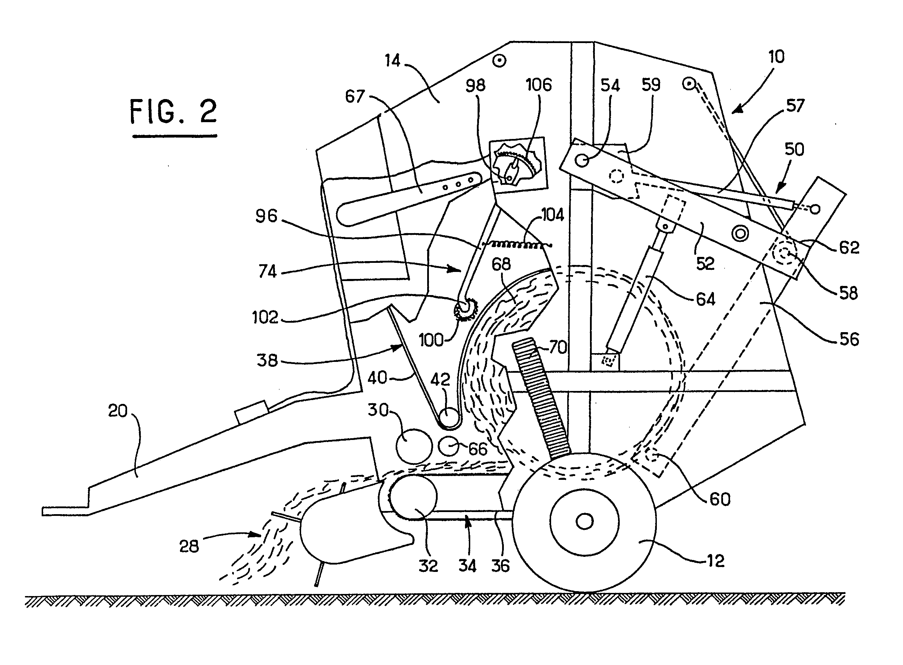

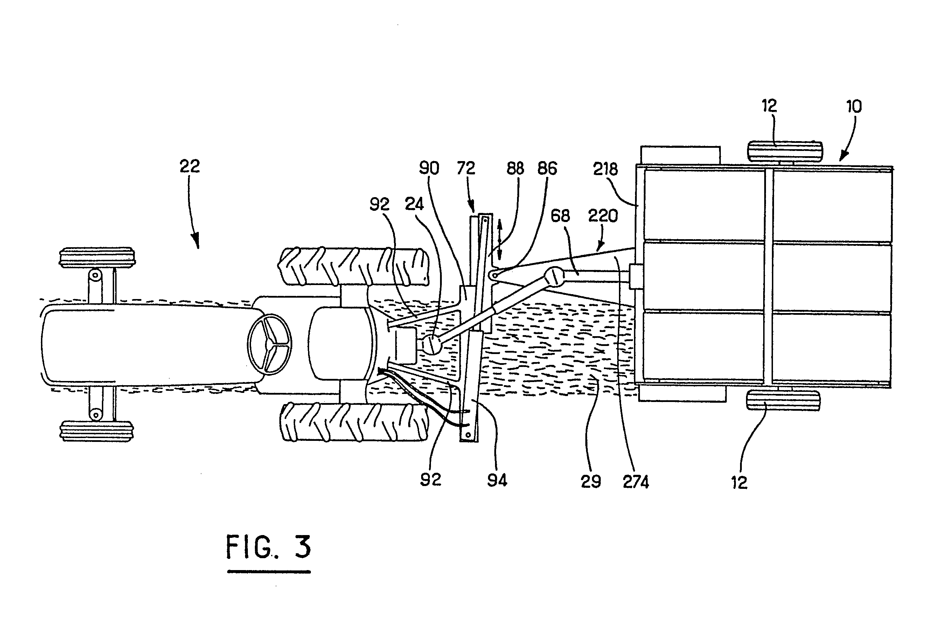

On a représenté sur les dessins une presse pour la formation de balles cylindriques ou rondes de grand diamètre à partir de fourrage ou analogue, comprenant un châssis principal mobile 10 monté sur une paire de roues 12. Le châssis principal comprend deux parois latérales verticales opposées gauche et droite 14 et 16 s'étendant dans le sens antéropostérieur, qui délimitent entre elles une chambre de formation de la balle. Une poutre transversale 18 (Fig. 1) ou une poutre 218 (Fig. 3) relie les extrémités avant des parois latérales 14 et 16, et un organe d'attelage ou timon creux 20 (Fig. 1 et 2) ou un timon 220 (Fig. 3) s'étend vers l'avant depuis le milieu de la poutre transversale 18 ou 218, pour atteler la presse à un tracteur 22 (visible seulement sur la Fig. 3), équipé d'un mécanisme de prise de force arrière classique 24. Le châssis principal comprend également une traverse supérieure 26 reliant les parois latérales au-dessus de la poutre 18.

Un mécanisme ramasseur 28, qui est de construction classique et qui en conséquence ne sera pas décrit en détail, est monté sur le châssis principal 10 de façon à pouvoir être réglé verticalement au moyen d'une paire de bras (non représentés) pouvant pivoter verticalement, ce mécanisme ramasseur s'étendant sur la largeur du châssis principal en avant de la chambre de formation de la balle et agissant pour soulever les produits de récolte à partir d'un andain 29 reposant sur le sol pendant la progression de la presse et pour les transférer vers l'arrière. Deux rouleaux de compression transversaux 30 et 32 tournant en sens opposés s'étendent entre les parois latérales 14 et 16 immédiatement derrière le mécanisme ramasseur 28, lequel amène les produits de récolte en direction de l'arrière à la commissure ménagée entre les rouleaux 30 et 32, qui à leur tour transfèrent les produits de récolte sous la forme d'une nappe sur un transporteur 14 du type à bande. Le transporteur 34 s'étend sur toute la largeur de la presse entre les parois latérales 14 et 16 et comprend une bande sans fin 36 qui passe autour du rouleau de compression inférieur 32 et d'un rouleau arrière (non représenté). Deux rouleaux intermédiaires (également

ment non représentés) s'étendent entre les parois latérales opposées et supportent le brin supérieur de la bande 36, ces rouleaux se trouvant sensiblement dans le même plan horizontal que le rouleau de compression inférieur 32, de sorte que le brin supérieur du transporteur 36 est sensiblement horizontal.

Un transporteur supérieur du type à bandes ou courroies 38 est disposé entre les parois latérales opposées 14 et 16 au-dessus du transporteur inférieur 34 et comprend un certain nombre de bandes ou courroies 40 qui sont disposées côte à côte sur la largeur de la presse. Les bandes passent autour d'un rouleau inférieur avant 42, d'un rouleau supérieur avant 44 et de deux rouleaux supérieurs intermédiaires dont l'un est indiqué en 46, qui s'étendent entre les parois latérales opposées et qui sont en contact avec les faces intérieures des bandes 40.

Un système de porte arrière 50 comprend deux bras supérieurs 52 dont les extrémités avant sont reliées respectivement aux parois latérales opposées 14 et 16 par des pivots 54, et deux bras inférieurs 56 qui sont reliés respectivement à pivotement aux extrémités arrière des bras supérieurs 52 par des pivots transversaux 58, seuls les bras situés du côté gauche de la machine étant représentés. Deux tiges 57 s'étendent respectivement entre les extrémités supérieures des bras inférieurs 56, au-dessus des pivots 58, et des consoles 59 prévues sur les parois latérales opposées 14, 16. Un rouleau arrière inférieur 60 tourne entre les extrémités inférieures des bras inférieurs 56, tandis qu'un rouleau supérieur 62 s'étend entre ces bras inférieurs coaxialement aux pivots 58, le transporteur 38 passant également autour des rouleaux 60 et 62. Deux vérins hydrauliques 64 (dont un seul est représenté) s'étendent respectivement entre les parois latérales opposées et les bras supérieurs 52, pour faire pivoter ces bras de façon synchrone autour de leurs pivots 54 afin d'ouvrir ou de fermer le système de porte 50.

Les transporteurs supérieur et inférieur 38, 34, de même que les rouleaux de compression 30, 32, un rouleau séparateur 66 disposé sous le rouleau 42 et le mécanisme ramasseur 28 sont entraînés par des transmissions par courroies classiques situées du côté gauche de la presse, la force motrice nécessaire pour les transmissions par courroies étant fournie de la façon usuelle par un arbre d'entraînement 68 s'étendant dans le sens antéro-postérieur, situé au-dessus du timon d'attelage 220, l'extrémité avant de cet arbre d'entraînement pouvant être reliée au mécanisme de prise de force 24 du tracteur (Fig. 3). L'extrémité arrière de l'arbre d'entraînement 58 est reliée à un arbre d'entraînement transversal (non représenté) par un couple de pignons coniques usuels, l'extrémité gauche de cet arbre transversal formant l'entrée des différentes transmissions par courroies destinées aux organes menés de la presse.

Initialement, pendant l'opération de formation de la balle, le rouleau inférieur arrière 60 se trouve dans une position située en avant de celle montrée sur la Fig. 2, et environ à mi-chemin sur la longueur du transporteur 34. Quand les produits de récolte sont amenés en nappe sur la face supérieure du brin supérieur du transporteur inférieur 34, la nappe se déplace vers l'arrière jusqu'à ce qu'elle vienne en contact avec le brin inférieur, qui se déplace vers le haut et vers l'avant, du jeu de bandes supérieur, ce qui déclenche le processus d'enroulement de la nappe de produits de récolte. Le rouleau séparateur transversal 66 occupe une position telle qu'il sépare ou décolle les produits de récolte des bandes 40, de sorte que ces produits ne passent pas entre le rouleau de compression supérieur 30 et le rouleau 42, le rouleau séparateur 66 définissant l'extrémité avant de la chambre de formation de la balle, tandis que le rouleau arrière déplaçable 60 en définit l'extrémité arrière. Au fur et à mesure de l'augmentation de diamètre de la balle 68, le système de porte arrière 50 pivote vers l'arrière, les tiges 57 obligeant l'extrémité inférieure des bras inférieurs 56 à se déplacer approximativement en ligne droite jusqu'à ce que le rouleau arrière 60 se trouve au-dessus de l'extrémité arrière du transporteur inférieur 34.

Bien entendu, pendant l'augmentation de diamètre de la balle, les bandes 40 doivent permettre des distances nettement accrues entre le rouleau inférieur arrière 60 et le rouleau inférieur avant 42, et un mécanisme classique de compensation de longueur, dont un ressort 70 faisant partie d'une paire de ressorts disposés de part et d'autre de la presse est représenté sur la Fig. 2, est prévu pour fournir la longueur de bandes requise. Les ressorts 70 fournissent une tension accrue dans les bandes 40 alors de l'augmentation de diamètre de la balle, la tension des bandes supérieures comprimant les produits de récolte en une balle.

Quand la formation de la balle 65 est terminée, le conducteur du tracteur fait normalement arrêter la presse pour interrompre l'admission des produits de récolte fournis par le mécanisme ramasseur 28. Le conducteur actionne alors une valve (non représentée) provoquant la sortie des cylindres 64 et ainsi le pivotement vers le haut du système de porte 50, de sorte que la balle complètement formée est éjectée par la porte jusque sur le sol.

On voit sur la Fig. 3 que l'andain 29 est nettement plus étroit que la largeur du mécanisme ramasseur 28. En conséquence, les produits de récolte ne vont être amenés, à un moment donné, qu'à une partie seulement de la commissure entre les rouleaux de compression 30, 32. Si une intervention remédiant à ce phénomène n'a pas lieu, la balle formée dans la chambre ne va pas être uniforme et va avoir un diamètre plus grand dans la partie correspondant à la zone de la commissure alimentée en produits de récolte.

Afin du résoudre ce problème, un mécanisme de guidage 72 est prévu pour déplacer latéralement la presse à balles, de telle sorte que les produits de récolte provenant de l'andain parviennent à la partie de la commissure qui est requise pour former une balle uniforme. Il est également prévu un dispositif détecteur ou palpeur 74 qui à la fois détecte les diamètres non uniformes de la section droite de la balle en cours de formation et déclenche le mouvement approprié du mécanisme de guidage. L'agencement va maintenant en être décrit en détail.

Le timon 20 représenté sur la Fig. 1 a en plan une forme de T, sa branche longitudinale 76 allant en divergeant vers l'arrière et étant reliée au tracteur par des moyens classiques par son extrémité avant, tandis que sa branche transversale 78 comporte dans sa face arrière une rainure 80 qui s'étend sur la longueur de cette partie. La rainure 80 reçoit de façon coulissante une languette correspondante 82 prévue sur la poutre transversale 18, cette rainure et cette languette étant profilées de manière à réaliser une liaison à coulisse en T entre le timon 20 et le châssis principal 10 de la presse, ce qui permet un déplacement de ce châssis 10 transversalement à la direction de déplacement du tracteur.

Un système à piston et cylindre ou vérin 84, relié à pivotement par ses extrémités respectivement à la branche transversale 78 du timon et à la poutre 18, fournit la force servant à provoquer ce déplacement transversal.

Le timon 220 du mode de réalisation que montre la Fig. 3 diffère de celui représenté sur les Fig. 1 et 2 par le fait qu'il comprend une branche longitudinale 274 rendue solidaire par son extrémité arrière de la poutre transversale 218. A son extrémité avant, cette partie longitudinale est reliée en 86 à une traverse 88 qui est reliée par un système à coulisse en T à une autre traverse 90, laquelle est à son tour reliée rigidement à deux barres 92 portées par le tracteur 22. Cette liaison à queue d'aronde agit de la même manière que celle réalisée entre la poutre 18 et la partie transversale 78 dans le mode de réalisation que montrent les Fig. 1 et 2, et elle est de même conjuguée à un vérin 94 pour provoquer le déplacement transversal de la traverse 88 et avec elle du châssis principal 10.

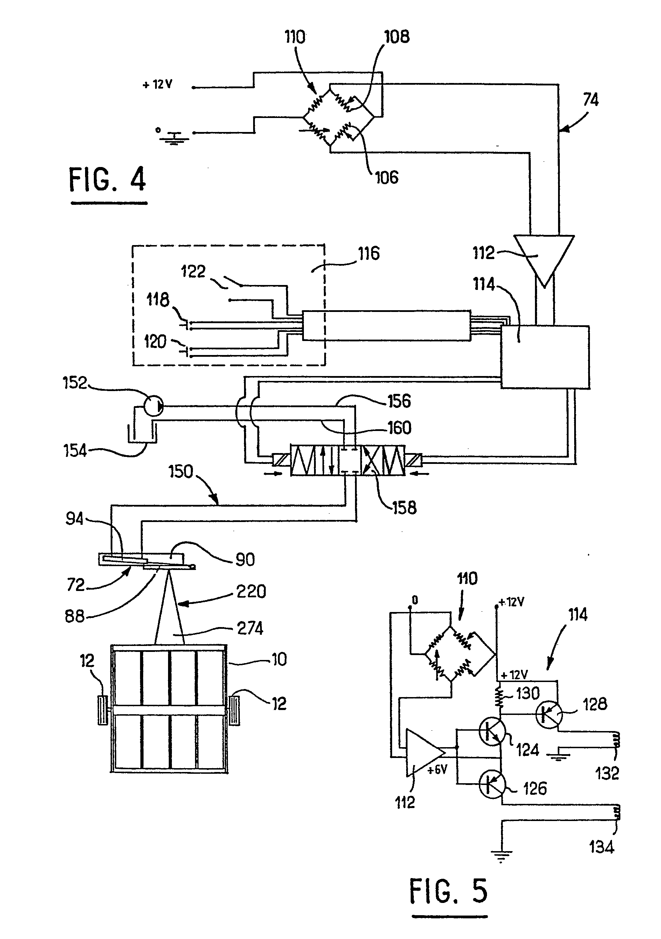

Les agencements représentés sur les Fig. 1 et 2 et sur la Fig. 3 utilisent le même dispositif palpeur 74, qui est illustré sur les Fig. 2 et 4.

Si l'on se reporte tout d'abord à la Fig. 2, un premier bras de levier 96 est monté à pivotement vers son extrémité supérieure sur une barre horizontale 98 fixée sur le châssis, ce bras 96 s'étendant vers le bas et vers l'avant à partir de cette barre et portant à son extrémité inférieure un petit galet de calibrage en caoutchouc 100 qui peut tourner librement autour d'un axe horizontal 102 et qui est en contact avec la surface orientée radialement vers l'extérieur de l'une des bandes 40, de sorte que le galet va être déplacé vers l'extérieur lors de l'augmentation de diamètre de la balle 68. Le bras de levier 96 est soumis à la sollicitation d'un ressort 104 qui s'oppose à ce mouvement.

Le premier bras de levier 96 est monté dans une position quelque peu écartée de l'extrémité gauche de la balle, c'est-à-dire de la paroi latérale 14, et un second bras de levier similaire (non représenté) est monté à une distance correspondante de l'autre extrémité de la balle.

La branche la plus courte du premier bras de levier 96, qui s'étend au-dessus de la barre formant pivot 98, est reliée à une résistance variable 106, de sorte que le mouvement du bras fait varier la valeur efficace de cette résistance. De la même manière, le second bras de levier est relié à une résistance variable 108. Les résistances 106, 108 font partie d'un circuit en pont électrique classique 110 auquel un potentiel de 12 volts par exemple est appliqué. Le pont sert en fait à comparer les valeurs efficaces des deux résistances 106, 108, qui bien entendu constituent une mesure des positions des premier et second bras de leviers et par suite des diamètres de la balle dans les parties correspondant à ces bras.

La sortie électrique du pont 110 est appliquée à un amplificateur 112 et le signal amplifié est transmis à un circuit de correction automatique 114. Une commande manuelle prioritaire indiquée d'une façon générale en 116 est prévue. Elle comprend des interrupteurs manuels 118 et 120 dont le rôle sera indiqué plus loin, ainsi qu'un interrupteur d'arrêt de sécurité 122.

Le circuit de correction 114 est représenté plus en détail sur la Fig. 5, sur laquelle on a montré également le circuit en pont 110 et l'amplificateur 112. On voit que la sortie de cet amplificateur 112 est appliquée aux bases de deux transistors 124, 126 et entre ces deux transistors respectivement. Ce circuit comporte également un troisième transistor 128 dont la base est connectée à un point situé entre l'alimentation, avec interposition d'une résistance fixe 130, et le premier transistor 124. Deux relais de commande de déplacement 132 et 134 sont montés entre les transistors 128 et 126 et la masse respectivement. Les interrupteurs à commande manuelle 118 et 120 permettent d'appliquer de façon prioritaire les tensions requises pour un déplacement latéral de la presse comme indiqué plus loin, tandis que l'interrupteur de sécurité 122 met le circuit à l'arrêt.

Comme visible sur la Fig. 4, le vérin 94 fait partie d'un circuit hydraulique 150 comprenant une pompe 152 prélevant du liquide à partir d'un réservoir 154 et reliée par une conduite 156 à une électro-valve 158. A partir de cette électro-valve, la conduite 156 est reliée à une extrémité du corps du vérin 94, et une conduite de retour 160 provenant de l'autre extrémité du corps de ce vérin 94 est reliée au réservoir 154 à travers l'électro-valve 158. Le vérin 94 est du type à double effet, et on voit aisément sur la Fig. 4 que le déplacement du tiroir de l'électro-valve 158 dans un sens ou dans l'autre à partir de la position de repos représentée sur la Fig. 4 va provoquer la sortie ou la rentrée du vérin 94, ce qui va assurer un déplacement latéral correspondant du châssis de la presse.

Les solénoïdes de l'électro-valve 158 sont constitués par les enroulements de relais 132 et 134, la connexion avec le circuit de correction étant assurée par des conducteurs comme indiqué sur la Fig. 4, et on comprendra que les sens d'actionnement de l'électro-valve et en conséquence de déplacement du châssis de la presse sont déterminés en vue d'une correction par compensation des irrégularités de diamètre détectées par les galets palpeurs 100.

Ainsi, quand un diamètre non uniforme de la balle en cours de formation 68 est détecté comme indiqué précédemment, par exemple si un diamètre plus petit apparaît à l'extrémité droite de la balle, un signal électrique provenant du circuit de correction 114 est appliqué de manière à déplacer la valve 158 vers la droite et le vérin 94 va se raccourcir en provoquant un coulissement de la traverse 88 vers l'intérieur de la traverse fixe 90, c'est-à-dire vers la gauche, de sorte que le châssis principal va également être déplacé vers la gauche. Il s'ensuite que l'andain 29 va être alors présenté vers la partie droite de la chambre de formation de la balle et qu'il va en résulter une augmentation de diamètre de la partie correspondante de cette balle, ce qui va ramener ladite partie au diamètre correct. Il est évident qu'au fur et à mesure de cette alimentation le diamètre va augmenter et va dépasser celui atteint en un autre point de la longueur de la balle. Cette différence va être détectée et le vérin 94 va être à nouveau commandé pour déplacer le châssis principal jusqu'à une position telle que les produits de l'andain 29 parviennent dans la partie de la balle ayant un diamètre plus faible. Etant donné que tout ceci se produit automatiquement, le conducteur du tracteur doit seulement porter son attention sur la conduite du véhicule afin de lui faire suivre une route normale correspondant à l'andain.

Dans le cas du mode de réalisation que montre la Fig. 1, le vérin 84 est agencé et monté de façon à sortir pour déplacer le châssis 10 vers la droite et à se raccourcir pour le déplacer vers la gauche. Ceci peut être considéré non seulement comme une variante par rapport au montage du vérin 94 sur la Fig. 3, mais comme un complément à ce vérin 94 quand il est désirable de prévoir des moyens permettant de déplacer le châssis 10 à un degré nettement plus grand que cela n'est possible avec un seul vérin. Si l'on utilise deux vérins, ils peuvent être reliés hydrauliquement de façon à être actionnés simultanément, ou bien ils peuvent être commandés successivement.

Si désiré, des moyens peuvent être prévus pour diriger ou commander directement les roues 12 elles-mêmes, afin qu'elles suivent le mouvement de .la traverse 88 et (ou) de la poutre 18. Il est également possible de supprimer les poutres à coulisse et d'agencer simplement l'ensemble pour que les roues 12 soient commandées en fonction des signaux provenant du dispositif détecteur 74.

La faculté de direction de la presse peut également être exploitée en ce qui concerne le déchargement d'une balle complètement formée. Dans le type de presse à balles représenté sur les dessins, et comme cela a été indiqué précédemment, la balle est éjectée vers l'arrière à travers la porte relevée, jusque sur le sol. Dans cette position, il n'est pas possible, à moins que la presse ne soit déplacée, de refermer la porte sans que celle-ci vienne heurter et éventuellement endommager la balle. Quand une balle est prête à être éjectée, le dispositif de commande manuelle prioritaire 116 est utilisé pour déplacer complètement le châssis 10 d'un côté. La balle est alors éjectée et le dispositif de commande est utilisé pour ramener complètement le châssis 10 de l'autre côté, ce qui permet de refermer librement la porte.

La presse à balles est agencée de manière à être attelée, dans sa position normale, directement derrière le tracteur, mais le mécanisme de guidage 72 peut être adapté en vue de permettre à la presse d'être déportée d'un côté du tracteur dans sa position normale. Dans ce dernier cas, le tracteur ne se déplace pas en enjambant l'andain 29, mais plutôt à côté de celui-ci et selon un trajet parallèle.

Suivant une autre variante, le signal nécessaire pour contrôler la forme de la balle pourrait être obtenu en prévoyant de petits galets de caoutchouc 100 des deux côtés de la balle et sur son axe médian, pour détecter la différence de "mou" dans les bandes de formation de la balle, le signal final pour actionner le dispositif de commande de déplacement latéral ou de serpentement résultant d'une comparaison entre tous les signaux individuels.

En outre, bien que l'on ait décrit ci-avant, pour assurer le déplacement latéral du châssis de la presse, une commande hydro-électrique, il va de soi que cette commande, y compris l'étage de comparaison et de correction, pourrait être assurée entièrement par voie électrique ou hydraulique, ou bien par des moyens électro-mécaniques, hydro-mécaniques ou analogues, la détection étant transmise elle-même par des moyens électriques, hydrauliques ou mécaniques.

**Revendications**

1.— Presse à balles (10) destinée à être attelée à un tracteur devant progresser parallèlement à un andain, comprenant une chambre s'étendant transversalement à la direction de progression de la presse pour la formation d'une balle cylindrique (68) à partir de produits de récolte, et un orifice d'entrée s'étendant transversalement à l'avant de cette chambre et débouchant dans celle-ci, ainsi que des moyens (28) pour amener ces produits de récolte à cet orifice d'entrée à partir d'un andain de largeur inférieure à celle dudit orifice d'entrée, et des moyens de direction ou de guidage (72) capables de déplacer latéralement la presse par rapport au tracteur et ainsi à l'andain, afin de rétablir l'uniformité de diamètre de la balle lors de sa formation caractérisée en ce qu'elle comprend des moyens détecteurs (74), tels que des moyens palpeurs, pour détecter les variations de diamètre de la balle (68) entre ses différentes sections droites au cours de sa formation, et en ce que ces moyens détecteurs sont reliés à ces moyens de direction et de guidage pour commander automatiquement les déplacements latéraux de la presse (10) par rapport à l'andain (29) en fonction de la détection assurée par lesdits moyens détecteurs.

2.— Presse à balles suivant la revendication 1, caractérisée en ce que les moyens de direction ou guidage (72) comprennent deux organes (18, 78, 88, 90) disposés transversalement à la direction de déplacement de la presse (10), ces organes étant reliés ou pouvant être reliés au tracteur (22) et à la presse respectivement et étant déplaçables l'un par rapport à l'autre dans la direction transversale, de sorte que la presse se déplace transversalement à l'andain (29), un dispositif d'actionnement (84, 94) étant prévu pour assurer ce déplacement relatif.

3.— Presse à balles suivant la revendication 2, caractérisée en ce qu'un système à piston et cylindre ou vérin (84, 94) est relié aux organes (18, 78, 88, 90) pour assurer leur déplacement relatif.

4.— Presse à balles suivant la revendication 2 ou 3, caractérisée en ce que ces organes (18, 78, 88, 90) sont constitués par une poutre ou analogue, l'une de ces poutres (18, 88) présentant une languette (82) ou un profilage longitudinal, tandis que l'autre poutre (78, 90) présente une rainure longitudinale correspondante (80) ou un profilage analogue dans lequel cette languette est montée de façon coulissante pour permettre ce déplacement relatif.

5.— Presse à balles suivant la revendication 4, caractérisée en ce que la presse (10) comprend un châssis principal muni de parois latérales (14, 16), l'une des poutres (18) s'étendant entre les extrémités avant de ces parois latérales.

6.— Presse à balles suivant la revendication 5, caractérisée en ce que l'autre organe (78) forme la branche transversale d'un élément en forme de T (20) dont la branche longitudinale (76) peut être reliée à pivotement à un tracteur.

7.— Presse à balles suivant la revendication 4, caractérisée en ce qu'un organe (88) est relié de façon pivotante à un timon (200) lui-même relié rigidement au châssis principal de la presse (10).

8.— Presse à balles suivant la revendication 4, caractérisée en ce qu'elle comprend deux paires d'organes (18, 78, 88, 90) constituant les moyens de direction ou guidage (72), en ce que la presse (10) comprend un châssis principal muni de parois latérales (14, 16), l'une des poutres (18) d'une paire d'organes s'étendant entre les extrémités avant de ces parois latérales, tandis que l'autre poutre (78) constitue la branche transversale d'un élément en forme de T (20), et en ce que l'une des poutres (88) de l'autre paire d'organes est reliée à pivotement à la branche longitudinale (76) de cet élément en forme de T, tandis que l'autre poutre (90) de cette seconde paire d'organes est reliée ou peut être reliée rigidement au tracteur (22).

9.— Presse à balles suivant l'une quelconque des revendications précédentes, caractérisée en ce que les moyens de détection (74) comprennent au moins un premier et un second bras (96) montés de façon pivotante, pouvant se déplacer chacun en fonction de l'augmentation de section droite de la balle (68) en cours de formation et écartés l'un de l'autre sur la longueur de cette balle, et un circuit électrique (110) agencé de façon à détecter les positions des bras (96) et à fournir une sortie commandant les moyens de direction (72) en fonction de cette position.

10.— Presse à balles suivant la revendication 9, caractérisée en ce que les bras (96) portent des galets palpeurs (100) disposés de façon à chevaucher directement ou indirectement la surface de la balle (68) en cours de formation.

11.— Presse à balles suivant la revendication 10, caractérisée en ce que les bras (96) sont sollicités élastiquement (104) vers la balle (68) en cours de formation.

12.— Presse à balles suivant l'une quelconque des revendications 9 à 11, caractérisée en ce que le circuit électrique comprend une résistance variable (106, 108) prévue pour chaque bras (96), un circuit électrique en pont (110) dans lequel ces résistances variables sont montées et un circuit de correction (114) recevant un signal de sortie du circuit en pont et fournissant luimême un signal de sortie pour la commande des moyens de direction ou guidage (72), chaque bras (96) étant relié à la résistance variable conjuguée (106, 108) afin que la valeur efficace de cette résistance varie en fonction du mouvement du bras résultant de l'augmentation de diamètre de la balle en cours de formation.

13.— Presse à balles suivant la revendication 1, comportant des roues montées de façon orientable, caractérisée en ce que les moyens de direction ou guidage (72) comprennent un dispositif pour diriger ou orienter les roues (12) sur lesquelles la presse est montée.

**Claims**

1. A bale press (10) which is intended to be coupled to a tractor which is to advance parallel to a windrow, comprising a chamber which extends transversely with respect to the direction of forward movement of the press, for forming a cylindrical bale (68) from crop products, and an intake orifice which extends transversely at the front of said chamber and which opens thereinto, and means (28) for feeding said crop products to said intake orifice from a windrow of a width which is less than that of said intake orifice, and directing or guiding means (72) which are capable of laterally displacing the press with respect to the tractor and thus with respect to the windrow, in order to re-establish uniformity of diameter of the bale when the bale is being formed, characterised in that it comprises detector means (74) such as sensor means for detecting the variations in diameter of the bale (68) between the different cross-sections thereof in the course of formation thereof, and that said detector means are connected to said directing and guiding means for automatically controlling the lateral displacements of the press (10) with respect to the windrow (29) in dependence on the detection action performed by said detector means.

2. A bale press according to claim 1 characterised in that the directing or guiding means (72) comprise two members (18, 78, 88, 90) which are disposed transversely with respect to the direction of displacement of the press (10), which members are or can be connected to the tractor (22) and to the press respectively and are displaceable relative to each other in the transverse direction so that the press is displaced transversely with respect to the windrow (29), an actuating means (84, 94) being provided to produce said relative displacement.

3. A bale press according to claim 2 characterised in that a piston-cylinder or jack system (84, 94) is connected to the members (18, 78, 88, 90) to provide for the relative displacement thereof.

4. A bale press according to claim 2 or claim 3 characterised in that said members (18, 78, 88, 90) comprise a beam or the like, one of said beams (18, 88) having a tongue portion (82) or longitudinal profiled means, while the other beam (78, 90) has a corresponding longitudinal groove (80) or a similar profiled means in which said tongue portion is mounted slidably to permit said relative displacement.

5. A bale press according to claim 4 characterised in that the press comprises a main chassis provided with side walls (14, 16), one of the beams (18) extending between the front ends of said side walls.

6. A bale press according to claim 5 characterised in that the other member (78) forms the transverse arm of a T-shaped element (20), the longitudinal arm (76) of which can be pivotally connected to a tractor.

7. A bale press according to claim 4 characterised in that a member (88) is pivotally connected to a draw bar (220) which itself is rigidly connected to the main chassis of the press (10).

8. A bale press according to claim 4 characterised in that it comprises two pairs of members (18, 78, 88, 90) forming the directing or guiding means (72), that the press (10) comprises a main chassis provided with side walls (14, 16), one of the beams (18) of a pair of members extending between the front ends of said side walls while the other beam (78) forms the transverse arm of a T-shaped element (20), and that one of the beams (88) of the other pair of members is pivotally connected to the longitudinal arm (76) of said T-shaped element while the other beam (90) of said second pair of members is or can be connected rigidly to the tractor (22).

9. A bale press according to any one of the preceding claims characterised in that the detector means (74) comprise at least first and second pivotally mounted arms (96) which can each be displaced in dependence on the increase in cross-section of the bale (68) as it is being formed and which are spaced from each other over the length of said bale, and an electrical circuit (110) which is so arranged as to detect the positions of the arms (96) and to produce an output controlling the directing means (72) in dependence on said position.

10. A bale press according to claim 9 characterised in that the arms (96) carry sensor rollers (100) which are so arranged as directly or indirectly to ride against the surface of the bale (68) as it is being formed.

11. A bale press according to claim 10 characterised in that the arms (96) are resiliently (104) urged towards the bale (68) as it is being formed.

12. A bale press according to any one of claims 9 to 11 characterised in that the electrical circuit comprises a variable resistor (106, 108) for each arm (96), an electrical bridge circuit (110) in which said variable resistors are connected and a correction circuit (114) which receives an output signal from the bridge circuit and which itself produces an output signal for controlling the directing or guiding means (72), each arm (96) being connected to the conjugate variable resistor (106, 108) so that the effective value of said resistor varies in dependence on the movement of the arm resulting from the increase in diameter of the bale as it is being formed.

13. A bale press according to claim 1 comprising steerably mounted wheels characterised in that the directing or guiding means (72) comprise a device for directing or steering the wheels (12) on which the press is mounted.

**Patentansprüche**

1.— Ballenpresse (10), die zum Ankuppeln an ein vorderes Zugfahrzeug bestimmt ist, das parallel eines Schwads fortbewegbar ist, welche eine sich quer zur Fortbewegungsrichtung der Presse erstreckende Kammer zur Bildung eines zylindrischen Ballens (68) aus Ernteprodukten und eine Eintrittsöffnung, die sich quer vor dieser Kammer erstreckt und in diese mündet, sowie Mittel (28), um diese Ernteprodukte in diese Eintrittsöffnung von einem Schwad geringerer Breite als der der genannten Eintrittsöffnung zu führen, und Lenk- oder Führungsmittel (72) umfasst, die geeignet sind, die Presse in bezug auf das Zugfahrzeug und somit gegenüber dem Schwad seitlich zu versetzen, um die Gleichförmigkeit des Durchmessers des Ballens während seiner Bildung wiederherzustellen, dadurch gekennzeichnet, dass sie Detektormittel (74) umfasst, wie Fühlmittel, um während der Bildung des Ballens die Veränderungen des Durchmessers des Ballens (68) zwischen seinen verschiedenen Querschnitten festzustellen, und dass diese Detektormittel mit den Lenk- oder Führungsmitteln verbunden sind, um automatisch die seitliche Verstellung der Presse (10) gegenüber dem Schwad (29) in Abhängigkeit von den durch die genannten Detektormittel getroffenen Feststellungen zu steuern.

2.— Ballenpresse nach Anspruch 1, dadurch gekennzeichnet, dass die Lenk- oder Führungsmittel (72) zwei Organe (18, 78, 88, 90) umfassen, die quer zur Fortbewegungsrichtung der Presse (10) angeordnet sind, wobei diese Organe mit dem Zugfahrzeug (22) bzw. der Presse verbunden sind oder verbunden werden können und gegeneinander in Querrichtung verstellbar sind derart, dass sich die Presse quer zum Schwad (29) verstellt, wobei eine Betätigungsvorrichtung (84, 94) vorgesehen ist, um diese relative Verstellung sicherzustellen.

3.— Ballenpresse nach Anspruch 2, dadurch gekennzeichnet, dass ein System aus Kolben und Zylinder oder eine Hubeinrichtung (84, 94) mit den Organen (18, 78, 88, 90) verbunden ist, um deren relative Verstellung sicherzustellen.

4.— Ballenpresse nach Anspruch 2 oder 3, dadurch gekennzeichnet, dass diese Organe (18, 78, 88, 90) durch einen Träger oder dergleichen gebildet sind, wobei einer der Träger (18, 88) eine Führungs-feder (82) oder ein Langprofil darbietet, während der andere Träger (78, 90) eine korrespondierende Längsrinne (80) oder ein analoges Profil darbietet, in dem die Führungs-feder verschiebbar montiert ist, um die relative Verstellung zu gestatten.

5.— Ballenpresse nach Anspruch 4, dadurch gekennzeichnet, dass die Presse (10) ein Hauptchassis mit Seitenwänden (14, 16) umfasst und dass einer der Träger (18) sich zwischen den vorderen Enden dieser seitlichen Wände erstreckt.

6.— Ballenpresse nach Anspruch 5, dadurch gekennzeichnet, dass das andere Organ (78) einen Querarm eines T-förmigen Elementes (20) bildet, dessen Längsarm (76) schwenkbar mit einem Zugfahrzeug verbunden werden kann.

7.— Ballenpresse nach Anspruch 4, dadurch gekennzeichnet, dass ein Organ (88) schwenkbar mit einer Deichsel (220) verbunden ist, die ihrerseits starr mit dem Hauptchassis der Presse (10) verbunden ist.

8.— Ballenpresse nach Anspruch 4, dadurch gekennzeichnet, dass sie zwei Organpaare (18, 78, 88, 90) umfasst, welche die Lenk- oder Führungsmittel (72) bilden, dass die Presse (10) ein Hauptchassis mit Seitenwänden (14, 16) umfasst, wobei einer der Träger (18) des einen Organpaares sich zwischen den vorderen Enden dieser seitlichen Wände erstreckt, während der andere Träger (78) einen Querarm eines T-förmigen Elementes (20) bildet, und dass der eine der Träger (88) des anderen Organpaares schwenkbar mit dem Längsarm (76) des T-förmigen Elementes verbunden ist, während der andere Träger (90) dieses zweiten Organpaares starr mit dem Zugfahrzeug (22) verbunden ist oder verbunden werden kann.

9.— Ballenpresse nach irgendeinem der voranstehenden Ansprüche, dadurch gekennzeichnet, dass die Detektormittel (74) wenigstens einen ersten und einen zweiten Arm (96), die schwenkbar montiert sind, von denen sich jeder in Abhängigkeit von der Vergrösserung des Querschnittes des Ballens (68) während der Bildung verstellen kann und die gegeneinander auf der Länge dieses Ballens versetz vorgesehen sind, und einen elektrischen Kreis (110) umfassen, der in der Weise wirksam ist, dass er die Stellungen der Arme (96) feststellt und einen Ausgang liefert, der die Lenkmittel (72) in Abhängigkeit von dieser Stellung steuert.

10.— Ballenpresse nach Anspruch 9, dadurch gekennzeichnet, dass die Arme (96) Tastrollen (100) tragen, die so angeordnet sind, dass sie die Oberfläche des Ballens (68) im Verlauf der Bildung direkt oder indirekt beaufschlagen.

11.— Ballenpresse nach Anspruch 10, dadurch gekennzeichnet, dass die Arme (96) in Richtung auf den Ballen (68) während der Bildung elastisch vorgespannt sind (104).

12.— Ballenpresse nach irgendeinem der Ansprüche 9—11, dadurch gekennzeichnet, dass der elektrische Kreis einen veränderlichen Widerstand (106, 108) der für jeden Arm (96) vorgesehen ist, einen elektrischen Brückenkreis (110), in dem die veränderlichen Widerstände montiert sind, und einen Korrekturkreis (114) umfasst, der ein Ausgangssignal des Brückenkreises empfängt und selbst ein Ausgangssignal zur Steuerung der Lenk- oder Führungsmittel (72) liefert, wobei jeder Arm (96) mit dem zugehörigen veränderlichen Widerstand (106, 108) verbunden ist, so dass sich der wirksame Wert dieses Widerstandes in Abhängigkeit von der Bewegung des Armes verändert, welche aus der Vergrösserung des Durchmessers des Ballens während des Verlaufs der Bildung resultiert.

13.— Ballenpresse nach Anspruch 1, welche Räder umfasst, die ausrichtbar angeordnet sind, dadurch gekennzeichnet, dass die Lenk- oder Führungsmittel (72) eine Vorrichtung umfassen, um die Räder (12), auf denen die Presse montiert ist, zu lenken oder auszurichten.

FIG. 1

FIG. 2

FIG. 3

0 060 956

FIG. 4

FIG. 5